# FASCICULE DE BREVET EUROPEEN

(11) **EP 2 633 131 B1**
(45) Date de publication et mention de la délivrance du brevet: **25.03.2015**
(21) Numéro de dépôt: 11775798.9
(22) Date de dépôt: 26.10.2011
(51) Int. Cl.: E04B 2/02

(54) **ELEMENT DE CONSTRUCTION EN TERRE CRUE**
BAUELEMENT AUS LEHMZIEGEL
CONSTRUCTION ELEMENT MADE OF ADOBE

(30) Priorité: 28.10.2010 EP 10189218
(43) Date de publication de la demande: 04.09.2013
(73) Titulaire: ARGIO S.A., 1480 Tubize (BE)
(72) Inventeur: DESPRET, Géry, B-1320 Beauvechain (BE)
(74) Mandataire: Decamps, Alain René François
(86) Numéro de dépôt international: PCT/EP2011/068767
(87) Numéro de publication internationale: WO 2012/055918

(56) Documents cités:
- EP-A1- 1 820 916
- DE-A1- 10 003 213
- FR-A1- 2 936 533

## Description

### Domaine de l'invention

L'invention se rapporte à des éléments de construction en terre crue comprimée.

L'invention se rapporte aussi à un procédé d'assemblage d'une partie d'édifice à partir de tels éléments.

### Introduction

La terre crue est utilisée depuis des millénaires comme matériau de construction. Elle est encore toujours le matériau de construction le plus répandu à travers le monde. Un tiers de l'humanité vit dans un habitat en terre, soit plus de deux milliards de personnes dans 150 pays, le plus souvent dans le tiers-monde.

La terre crue sous une forme stabilisée connaît également désormais un intérêt dans les pays occidentaux notamment en raison de ses propriétés s'inscrivant dans la démarche du développement durable : excellente durabilité, réduction des coûts de transport et de transformation (pratiquement sans dépenser d'énergie), grande inertie thermique, recyclage aisé des gravats etc. La stabilisation de la terre crue, qui vise à réduire sa sensibilité à l'eau et à augmenter sa résistance mécanique, peut être effectuée par compression/compactage et/ou par voie chimique, par exemple en ajoutant de la chaux. Il existe différentes techniques de mise en oeuvre de terre crue stabilisée, dont le pisé et les blocs de terre comprimée. Ces techniques exigent toutefois beaucoup de temps et de main d'oeuvre.

D'autres avantages de la terre crue résident en son caractère incombustible et sain, notamment hypoallergénique.

Par ailleurs, la mise en oeuvre de terre crue présente aussi un intérêt esthétique, car elle permet une grande variété architecturale ainsi que des formes d'apparence complexe : murs, cloisons, voûtes, coupoles, corniches, éléments décoratifs de façade, etc.

Les architectes et les entreprises actives dans la mise en oeuvre de la terre crue s'efforcent de répandre ce mode de construction d'avenir, à la fois économique, sain, flexible au niveau de ses applications et à faible empreinte écologique. A cet effet, ces entreprises visent à augmenter la qualité de leurs édifices et leur productivité tout en réduisant autant que possible les coûts de main d'oeuvre.

### État de la technique

On connaît de tels éléments de construction en terre crue comprimée, par exemple, dans le document FR 2 861 010 qui divulgue un procédé de préfabrication d'éléments architectoniques stabilisés en pisé. L'assemblage de ces éléments n'y est toutefois pas décrit.

Cette remarque vaut également pour la demande FR 2 527 136 qui concerne un procédé de stabilisation d'éléments de construction réalisés en terre comprimée au moyen d'un compactage dynamique d'un mélange terre-eau-liant par la chute libre d'une masse.

Les documents FR 2 936 534 et FR 2 509 344 concernent des blocs en terre compressée et stabilisée présentant des profils permettant leur emboîtement et auto-alignement pour le montage de murs. Les blocs sont solidarisés entre eux par de la colle ou du mortier.

La demande internationale WO 1986/06126 porte sur des blocs auto-emboîtants en terre hyperpressée et stabilisée à froid pour la construction de murs sans joint. La stabilité de ces blocs est assurée par des injections de mortier liquide.

Le document FR 2 638 187 se rapporte à un bloc de construction en terre comprimée dont les faces apparentes sont constituées chacune d'une plaque de protection contre l'érosion. La solidarité entre les blocs est assurée par du mortier en tant que liant.

La demande internationale WO 2008/062299 porte sur des blocs de terre stabilisés qui comprennent une partie intérieure en terre non stabilisée et une fine couche en terre stabilisée sur une ou deux faces, lesquelles faces servent à protéger le mur construit avec de tels blocs contre l'humidité, l'effritement et l'abrasion. Les blocs de terre sont solidarisés par du mortier.

Dans ces cinq derniers documents, les blocs en terre crue comprimée décrits sont assemblés de manière traditionnelle par des moyens tels que la colle ou du mortier. Un élément de construction selon le préambule de la revendication 1 est connu de FR 2 936 533.

Ces moyens traditionnels présentent plusieurs inconvénients. En premier lieu ils ne permettent qu'une adhérence superficielle entre les éléments de construction. En outre, leur fabrication nécessite généralement une quantité non négligeable d'énergie et leur recyclage après démolition des édifices ainsi assemblés est difficile, ce qui est défavorable pour leur empreinte, écologique. Par ailleurs, l'imprégnation des surfaces des éléments de construction au moment de l'assemblage prend beaucoup de temps, ce qui nuit à la productivité.

### Résumé de l'invention

Un but de l'invention est de procurer un élément de construction en terre crue comprimée présentant des propriétés s'inscrivant dans le cadre du développement durable tout en permettant la réalisation de parties d'édifices dans des conditions optimales de tenue mécanique (stabilité), et de productivité.

Par élément de construction on entend dans la présente demande tout élément, porteur ou non, pouvant être mis en oeuvre dans le domaine de la construction, tel qu'un élément de maçonnerie, un élément de cloison, un élément de plancher, un élément de revêtement extérieur ou intérieur, un élément de décoratif extérieur ou intérieur etc.

A cette fin, l'élément de construction en terre crue argileuse comprimée selon l'invention est apte à s'agréger sur au moins une de ses faces à un élément adjacent par l'intermédiaire d'une couche. Celle-ci comprend un mélange gélifiable activable s'étendant sur l'au moins une face de l'élément. Cette couche peut être obtenue de différentes façons, par exemple par application d'un enduit ou par remplissage dans un moule.

Ce mélange gélifiable une fois activé est de nature à faire réagir entre elles sur une certaine profondeur les surfaces en contact des éléments adjacents. Il s'en suit que dans la zone de contact les matériaux interagissent et s'agrègent sous l'effet de phénomènes physico-chimiques, ce qui lie en profondeur les éléments entre eux sans former de joint et favorise donc la stabilité de parties d'édifices ainsi assemblées.

L'avantage de ce procédé est que l'on peut utiliser pour ce mélange gélifiable des éléments naturels, abondants et non toxiques, ce qui élimine tous les problèmes de transport et/ou de recyclage des déchets de construction.

Un autre but de l'invention est d'atteindre un effet esthétique particulier en utilisant un type de terre généralement négligé en raison de ses propriétés mécaniques.

A cette fin, la terre crue argileuse utilisée dans les éléments de construction selon l'invention est caractérisée par un indice de plasticité compris de préférence entre 10 et 35 (valeurs indicatives pour des terres « plastiques »), et de façon préférée supérieur à 35 (valeurs indicatives pour des terres « très plastiques » telles que celles comprenant de la smectite dont la bentonite). Ces terres, habituellement utilisées dans le domaine de la poterie et de l'industrie de la terre cuite, donnent à l'élément de construction une porosité de surface très faible et par conséquent un aspect fini de plus grande qualité.

Avantageusement, la terre crue argileuse est complétée par 3 à 10 % en poids de chaux avant compression. Ces teneurs en stabilisant permettent, de façon surprenante, à des réactions pouzzolaniques à court, moyen et long terme d'avoir une ampleur fort bénéfique, particulièrement en cas d'usage de terres plastiques à très plastiques, pour la durabilité ainsi que pour la résistance à l'érosion et à la compression de l'élément de construction selon l'invention.

La terre argileuse comprend avantageusement autant que possible d'une smectite à choisir parmi la montmorillonite et tout type de bentonite, de préférence calcique. Ces teneurs en smectite favorisent l'imperméabilisation et donc la résistance au gel des éléments de construction.

Avantageusement, le mélange gélifiable activable intégré à l'élément de construction comprend de la smectite à gonflement modéré, à choisir parmi la montmorillonite et tout type de bentonite, de préférence calcique. Ces argiles, qui peuvent gonfler lors de l'activation, amplifient le phénomène d'agrégation à l'interface entre éléments adjacents. Elles sont en outre, en cas de stabilisation des éléments à la chaux, les plus réactives par rapport à celle-ci et stimulent les réactions pouzzolaniques de la chaux, ce qui maximise la stabilisation de la construction.

Le mélange gélifiable activable comprend de préférence du sable silicieux ou toute autre matière inerte, perméable et d'une granulométrie comprise entre 0,02 et 5 mm. Cela permet d'assurer une activation en profondeur de la couche de mélange gélifiable activable. Celui-ci peut comprendre en outre des fines argileuses présentant un indice de plasticité supérieur à 35.

Avantageusement, l'élément de construction de l'invention comprend sur l'au moins une de ses faces d'agrégation des rainures aptes à coopérer, lors de l'activation, avec les rainures d'un élément adjacent qui sont disposées perpendiculairement aux rainures du premier élément, afin d'accentuer l'agrégation des éléments entre eux. Ces caractéristiques apportent des bénéfices en termes notamment de qualité (stabilité) de la construction et de productivité.

Un autre but de l'invention est de procurer un procédé d'assemblage d'une partie d'édifice à partir d'éléments de terre crue argileuse présentant des propriétés s'inscrivant dans le cadre du développement durable, qui permet sa réalisation dans des conditions optimales de tenue mécanique (stabilité), et de productivité.

A cette fin, le procédé d'assemblage d'une partie d'édifice selon l'invention, comprend la mise à disposition d'un moule et son remplissage par une terre crue argileuse qui est ensuite comprimée. Un élément de construction est ainsi formé. Il est ensuite démoulé. Une couche comprenant un mélange gélifiable activable est alors présente sur au moins une des faces de l'élément de construction qui est ensuite séché. Lors de la mise en oeuvre, les faces à assembler d'un premier et d'un deuxième éléments de construction sont badigeonnées ou aspergées de façon à activer le mélange gélifiable. Ces faces sont mises en contact et pressées l'une contre l'autre. Sous l'effet du mélange gélifié activée, la zone de contact se ramollit et peut gonfler légèrement. Les deux éléments accolés s'agrègent. On laisse ensuite sécher la partie d'édifice.

Les parties d'édifice réalisées selon le procédé de l'invention présentent, de par l'agrégation mutuelle des éléments de construction constitutifs, une tenue mécanique accrue, ce qui est avantageux, notamment dans des zones présentant une activité sismique.

Ce procédé présente également l'avantage que les opérations d'application de la couche du mélange gélifiable et de badigeonnage pour sa réactivation sont à la fois extrêmement simples et rapides. Cette technique favorise donc la productivité et l'accessibilité à une main d'oeuvre faiblement qualifiée que l'on rencontre en grand nombre dans les pays à faibles revenus.

Outre ses avantages socio-économiques, le procédé selon l'invention a aussi un impact favorable sur l'environnement et le développement durable. Il permet notamment de valoriser des terres locales non agricoles qui, dans de nombreux cas, constituent une source de matériau quasi inépuisable. Le procédé ne requiert pratiquement pas d'énergie et n'utilise pas de produits chimiques. Par ailleurs, les constructions sont, après démolition, facilement recyclables.

D'une façon générale, le procédé d'assemblage selon l'invention est parfaitement en phase avec le développement d'une économie axée sur la rentabilité, la durabilité et l'amélioration des conditions d'existence humaines. Il est de plus applicable pratiquement partout, quelque soit le niveau de développement local considéré.

Avantageusement, l'opération de remplissage du moule par de la terre crue argileuse est simultanée à l'opération de réalisation de la couche comprenant le mélange gélifiable activable. Selon une forme de réalisation préférée, l'on place sur au moins une des faces du moule une couche du mélange gélifiable activable, le reste du volume étant constitué de terre crue argileuse. Ces variantes permettent d'envisager une fabrication des éléments de construction davantage automatisée.

Par ailleurs, le procédé selon l'invention a également un impact esthétique, car du fait de l'agrégation des éléments de construction constituant la partie d'édifice, il n'y a pas de joints, sauf en cas de joint moulé à la fabrication de l'élément. La partie d'édifice peut donc avoir l'apparence extérieure d'un voile, ce qui permet d'économiser l'application d'un revêtement égalisateur.

Dans le procédé selon l'invention, l'opération de séchage de l'élément de construction est avantageusement un étuvage. Celui-ci est effectué de préférence à 100°C et 100% d'humidité. Le séchage peut également avoir lieu en autoclave sous une pression de vapeur. Ces dispositions ont pour effet, en cas de stabilisation des éléments de construction à la chaux, d'amplifier très nettement la réaction entre la terre et la chaux et de la contrôler, ce qui permet à la fois d'assurer une constance des caractéristiques physiques et surtout mécaniques sur l'ensemble d'une production et d'augmenter la productivité.

Avantageusement, le stockage des éléments est réalisé de façon à conserver aussi longtemps que possible l'humidité obtenue lors de l'étuvage ou du traitement à la vapeur en autoclave. Le maintien de cette humidité empêche la carbonatation de la chaux éventuelle et maximise de ce fait la chaux disponible pour les réactions pouzzolaniques, ce qui en augmente l'ampleur et améliore par conséquent la stabilité des éléments.

Selon l'invention, le badigeon est de préférence un lait de chaux.

Par ailleurs, le badigeon peut comprendre des fines argileuses présentant un indice de plasticité supérieur à 35 et/ou une faible quantité de sable silicieux ou de tout autre matière conductible du badigeon. Cette matière conductible doit permettre, en facilitant la pénétration du badigeon dans la couche gélifiable activable, l'activation en profondeur de cette dernière.

Dans le procédé d'assemblage selon l'invention on utilise de façon avantageuse une terre crue argileuse présentant un indice de plasticité compris de préférence entre 10 et 35, et de façon préférée supérieur à 35. Ces terres, habituellement utilisées dans le domaine de la poterie et de l'industrie de la terre cuite, donnent à l'élément de construction une porosité de surface très faible et par conséquent un aspect fini de plus grande qualité.

Selon le procédé d'assemblage de l'invention, on utilise avantageusement de la terre crue argileuse comprenant 3 à 10 % en poids de chaux avant compression. Ces teneurs en stabilisant permettent de façon surprenante des réactions pouzzolaniques à court, moyen et long terme d'une ampleur fort bénéfique, particulièrement en cas d'usage de terres plastiques à très plastiques, pour la durabilité ainsi que pour la résistance à l'érosion et à la compression de l'élément de construction selon l'invention.

Avantageusement, on utilise de la terre argileuse comprenant autant que possible d'une smectite à choisir parmi la montmorillonite et tout type de bentonite, de préférence calcique. La présence de smectite favorise l'imperméabilisation et donc la résistance au gel des éléments de construction.

On utilise avantageusement dans le procédé d'assemblage selon l'invention un mélange gélifiable comprenant de la smectite à gonflement modéré à choisir parmi la montmorillonite et tout type de bentonite, de préférence calcique. Ces argiles, qui peuvent gonfler, amplifient le phénomène d'agrégation à l'interface entre éléments adjacents.

Selon le procédé d'assemblage selon l'invention, on utilise de préférence un mélange gélifiable comprenant des fines argileuses présentant un indice de plasticité supérieur à 35. Avantageusement, ce mélange contient aussi du sable silicieux ou toute autre matière inerte, perméable et d'une granulométrie comprise entre 0,02 et 5 mm afin d'assurer la pénétration en profondeur du badigeon dans la couche du mélange gélifiable.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
La Fig.1 représente schématiquement en perspective une partie d'édifice (ici, un bloc de construction) selon le procédé de l'invention ;
Les Fig.2a à 2c et la Fig.3 sont des vues en coupe suivant le plan II-II de la Fig. 1 de différents stades d'assemblage de deux éléments de construction de la Fig. 1.
Les Fig. 4a et 4b montrent un élément de construction selon l'invention pourvu sur ses faces d'assemblage de rainures.
La Fig. 5 montre l'opération de remplissage de la terre argileuse et du mélange gélifiable activable avant compression selon une forme de réalisation du procédé de l'invention.

Les figures ne sont pas dessinées à l'échelle. Généralement, des éléments semblables sont dénotés par des références semblables dans les figures.

### Description détaillée de modes de réalisation particuliers

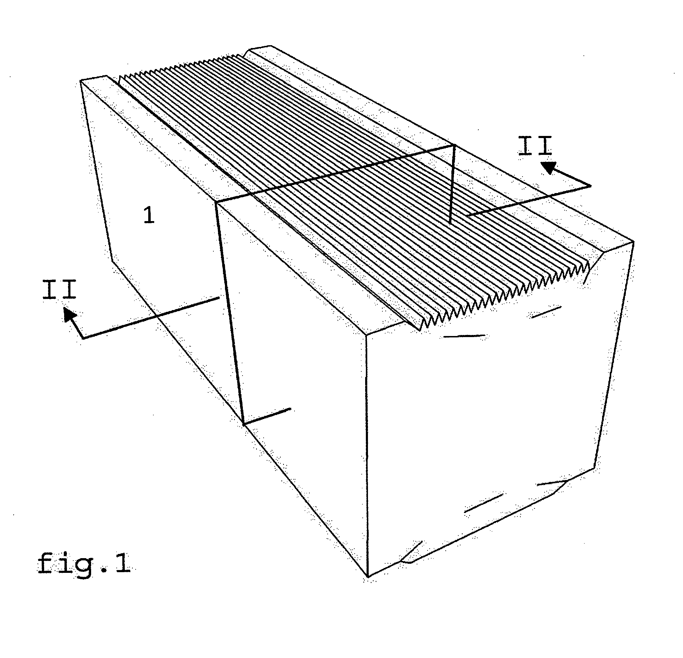

A la Fig. 1, l'on voit un élément de construction (ici un parpaing) 1 coupé par un plan II-II.

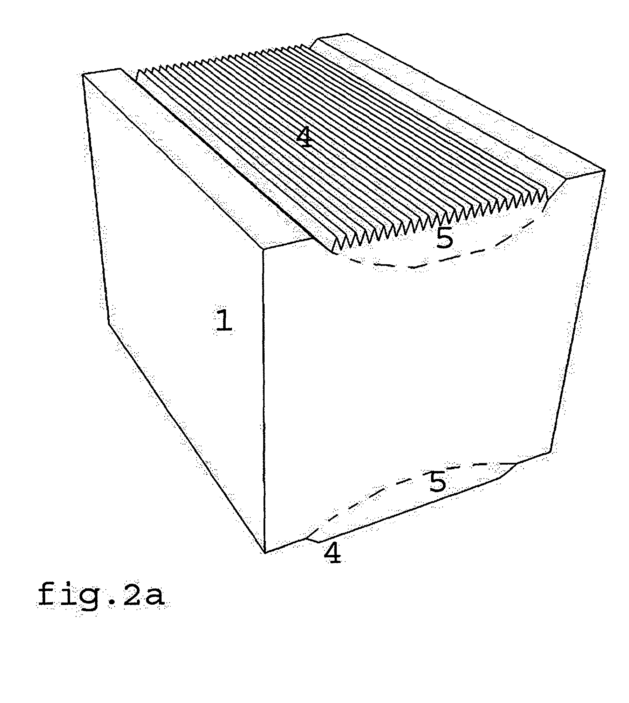

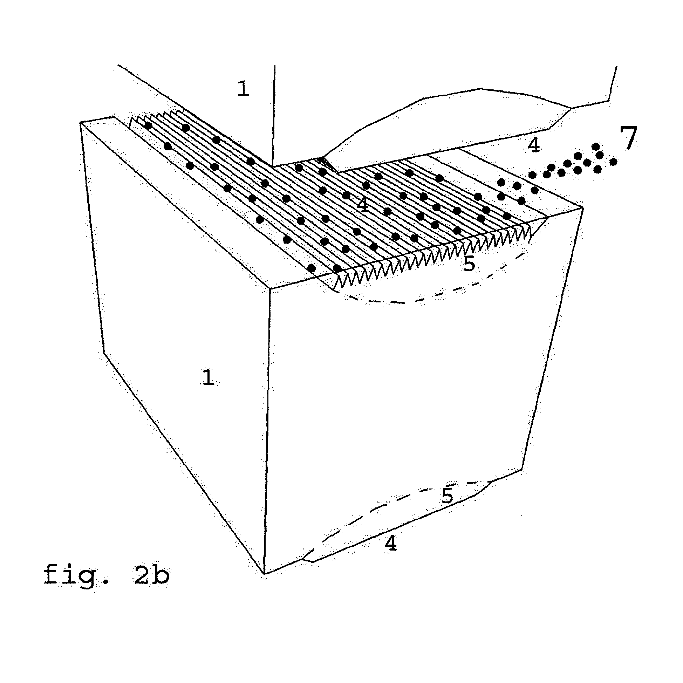

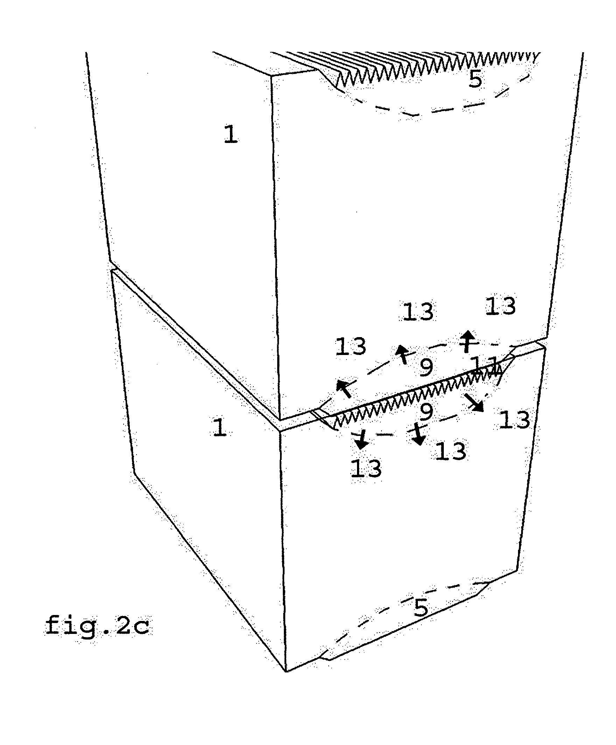

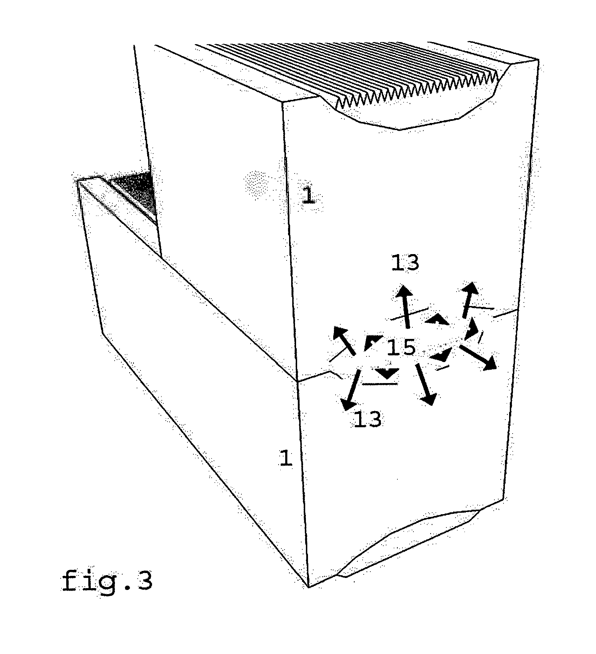

La Fig. 2a montre la section transversale de cet élément de construction 1 dont deux faces 4 sont pourvues d'une couche comprenant un mélange gélifiable activable 5. Au moment de l'assemblage de deux éléments 1 sur la face 4, un activateur, soit ici un lait de chaux 7, est appliqué sur cette face (Fig. 2b). Celui-ci a pour effet que le mélange 5 passe à l'état activé 9. Après assemblage (Fig. 2c), des phénomènes physico-chimiques viennent bouleverser, sous l'effet de l'activation du mélange géliforme 9, la zone de contact 11 entre les deux éléments 1. En effet, des réactions pouzzolaniques, des effets de ramollissement et de gonflement ainsi que d'autres effets physiques (par exemple : diffusion, phénomènes électriques etc....) déplacent les limites de cette zone 11 vers l'intérieur de chacun des éléments 1 dans le sens des flèches 13, ce qui a pour résultat que les deux éléments 1 s'agrègent l'un à l'autre, comme cela est représenté à la Fig. 3. Les deux éléments 1 se fondent finalement en un seul sans former de joint discernable.

La liaison entre les éléments 1 n'est donc pas superficielle mais s'étend en profondeur. En outre, les effets de gonflement entraînent par réaction une compression supplémentaire selon les flèches 15 dans chaque élément 1. Ces phénomènes d'agrégation et de compression sont bénéfiques pour la stabilité d'une partie d'édifice constituée de tels éléments de construction 1.

En cas d'ajout de chaux dans la terre argileuse constitutive des éléments de construction 1, des réactions pouzzolaniques ont lieu au sein de la terre argileuse. La stabilisation des éléments 1 qui en résulte est due pour l'essentiel à la dissolution des minéraux argileux dans l'environnement alcalin créé par la chaux et de la recombinaison de la silice (SiO₂) et de l'alumine (Al₂O₃) (que l'on retrouve généralement dans les terres argileuses très plastiques) des argiles et feldspaths en présence du calcium pour former des silicates complexes d'aluminium et de calcium qui cimentent les grains inertes (de quartz, par exemple) entre eux. Les réactions pouzzolaniques sont encore amplifiées en cas d'étuvage ou de traitement sous pression de vapeur en autoclave des éléments de construction, ce qui contribue à lisser les performances mécaniques des éléments de construction. Ceux-ci deviennent alors éligibles en particulier comme éléments porteurs. Le calcium en question provient aussi bien de la terre que du badigeon lait de chaux lorsqu'il a diffusé dans la terre lors de l'assemblage.

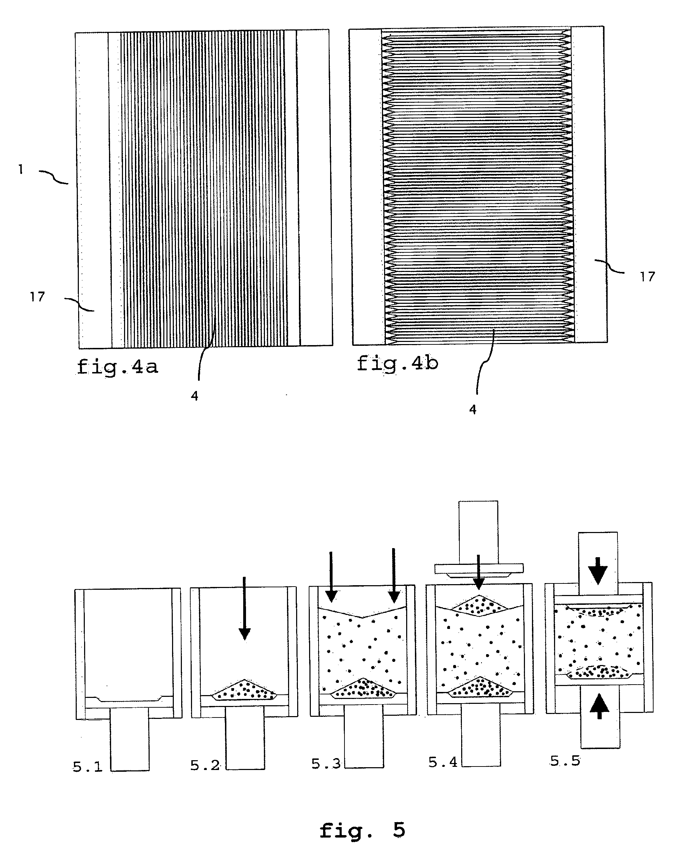

Les Fig. 4a et 4b montrent un élément de construction 1 pourvu sur sa face supérieure 4 de rainures longitudinales et sur sa face inférieure 4 de rainures transversales. Les rainures de la face supérieure 4 reçoivent le badigeon. Les surfaces sont rainurées afin d'augmenter la surface de contact développée avec le badigeon et donc l'ampleur de l'activation et des phénomènes physico-chimiques subséquents. La disposition perpendiculaire des rainures d'éléments superposés adjacents 1 fait qu'il n'y a pas emboîtement des rainures, ce qui évite le débordement du lait de chaux vers des épaulements 17 et donc la perte de produit d'activation de la couche gélifiable activable. La distance entre les épaulements 17 de deux éléments adjacents superposés 1 sert à contrôler l'affaissement de la zone de contact résultant de l'activation. Par ailleurs, la disposition mutuellement perpendiculaire des rainures aide aussi à l'affaissement de la zone de contact, consécutif à l'activation, de deux éléments adjacents superposés 1. Lors de cet affaissement, les rainures se rapetissent au fur à mesure de l'effondrement de la zone de contact et forcent le lait de chaux à diffuser à l'intérieur des éléments 1. Les rainures ont par conséquent un impact favorable sur la qualité de la construction et la productivité du procédé.

La Fig. 5 montre, en quatre phases (5.1 à 5.4), l'opération de remplissage d'un moule, dans laquelle trois couches sont formées successivement : une première couche de mélange gélifiable activable suivie d'une couche de terre argileuse, puis d'une seconde couche de mélange gélifiable activable. Ensuite l'ensemble de ces trois couches est comprimé (phase 5.5). Au contraire de l'enduction, on part d'une couche gélifiable exempte d'eau.

Il apparaîtra évident pour l'homme du métier que la présente invention n'est pas limitée aux exemples illustrés et décrits ci-dessus. La présence de numéros de référence ne peut être considérée comme limitative. L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs.

## Revendications

1. Elément de construction (1) en terre crue argileuse comprimée, apte à s'agréger sur au moins une de ses faces (4) à un élément (1) adjacent caracterisé en ce qu'il comprend une couche comprenant un mélange gélifiable activable (5) s'étendant sur l'au moins une face (4) de l'élément (1) qui permet ladite agrégation.

2. Elément de construction selon la revendication 1, **caractérisé en ce que** la terre crue argileuse présente un indice de plasticité compris entre 10 et 35.

3. Elément de construction selon la revendication 1, **caractérisé en ce que** la terre crue argileuse présente un indice de plasticité supérieur à 35.

4. Elément de construction selon l'une quelconque des revendications précédentes, **caractérisé en ce que** la terre crue argileuse comprend 3 à 10 % en poids de chaux.

5. Elément de construction selon l'une quelconque des revendications précédentes, **caractérisé en ce que** la terre crue argileuse comprend autant que possible d'une smectite à choisir parmi la montmorillonite et tout type de bentonite.

6. Elément de construction selon l'une quelconque des revendications précédentes, **caractérisé en ce que** le mélange gélifiable activable (5) comprend de la smectite à gonflement modéré à choisir parmi la montmorillonite et tout type de bentonite.

7. Elément de construction selon la revendication 6, **caractérisé en ce que** la bentonite est de type calcique.

8. Elément de construction selon l'une quelconque des revendications précédentes, **caractérisé en ce que** le mélange gélifiable activable (5) comprend des fines argileuses présentant un indice de plasticité supérieur à 35.

9. Elément de construction selon l'une quelconque des revendications précédentes, **caractérisé en ce que** le mélange gélifiable activable (5) comprend du sable silicieux ou toute autre matière inerte, perméable et d'une granulométrie comprise entre 0,02 et 5 mm.

10. Elément de construction selon l'une quelconque des revendications précédentes, **caractérisé en ce qu'**il comprend sur l'au moins une de ses faces (4) d'agrégation des rainures aptes à coopérer, lors de l'activation, avec les rainures de l'élément (1) adjacent qui sont disposées perpendiculairement aux rainures du premier élément (1), afin d'accentuer d'agrégation des éléments (1) entre eux.

11. Procédé d'assemblage d'une partie d'édifice à partir d'éléments (1) de terre crue argileuse comprimée, **caractérisé en ce qu'**il comprend les opérations suivantes :
a) mise à disposition d'un moule ;
b) remplissage de ce moule par une terre crue argileuse ;
c) compression de cette terre ;
d) démoulage de l'élément de construction (1) ainsi formé ;
e) réalisation d'une couche comprenant un mélange gélifiable activable (5) sur au moins une des faces (4) de l'élément de construction (1);
f) séchage de cet élément ;
g) stockage ;
h) badigeonnage des faces (4) à assembler d'un premier et d'un deuxième éléments de construction (1), de façon à activer le mélange gélifiable (5) ;
i) mise en contact et pressage de ces faces (4) l'une contre l'autre;
j) ramollissement et gonflement de la zone de contact (11) sous l'effet du mélange géliforme activé (9) ;
k) agrégation des deux éléments accolés (1) ;
l) séchage de la partie d'édifice.

12. Procédé d'assemblage d'une partie d'édifice selon la revendication 11, **caractérisé en ce que** l'opération e) est réalisée simultanément à l'opération b).

13. Procédé d'assemblage d'une partie d'édifice selon la revendication 12, **caractérisé en ce que** l'on place sur au moins une des faces du moule une couche du mélange gélifiable activable (5), le reste du volume étant constitué de terre crue argileuse.

14. Procédé d'assemblage d'une partie d'édifice selon la revendication 11, **caractérisé en ce que** l'opération e) est réalisée par l'application d'un enduit comprenant le mélange gélifiable activable (5) après l'opération b).

15. Procédé d'assemblage d'une partie d'édifice selon l'une quelconque des revendications 11 à 14, **caractérisé en ce que** l'opération de séchage de l'élément (1) est sélectionnée parmi un étuvage et un traitement sous pression de vapeur en autoclave.

16. Procédé d'assemblage d'une partie d'édifice selon l'une quelconque des revendications 11 à 15, **caractérisé en ce que** le badigeon est un lait de chaux (7).

17. Procédé d'assemblage d'une partie d'édifice selon l'une quelconque des revendications 11 à 16, **caractérisé en ce que** le badigeon comprend des fines argileuses présentant un indice de plasticité supérieur à 35.

## Patentansprüche

1. Bauelement (1) aus verdichtetem tonigem Lehm, das sich zumindest an einer der Seiten (4) mit einem angrenzenden Element (1) verbinden lässt, das **dadurch gekennzeichnet** ist, dass es auf mindestens einer Seite (4) des Elements (1) eine gelierbare, aktivierbare (5) Beschichtung aufweist, die diese Verbindung ermöglicht.

2. Bauelement gemäß Anspruch 1, das **dadurch gekennzeichnet** ist, dass der tonige Lehm eine Plastizitätszahl zwischen 10 und 35 aufweist.

3. Bauelement gemäß Anspruch 1, das **dadurch gekennzeichnet** ist, dass der tonige Lehm eine Plastizitätszahl über 35 besitzt.

4. Bauelement gemäß einem der vorhergehenden Ansprüche, das **dadurch gekennzeichnet** ist, dass der tonige Lehm einen Kalkgehalt von 3 bis 10 % aufweist.

5. Bauelement gemäß einem der vorhergehenden Ansprüche, das **dadurch gekennzeichnet** ist, dass die gelierbare, aktivierbare Mischung (5) so weit wie möglich Smektit - auszuwählen aus Montmorillonit und allen Formen von Betonit - enthält.

6. Bauelement gemäß einem der vorhergehenden Ansprüche, das **dadurch gekennzeichnet** ist, dass die gelierbare, aktivierbare Mischung (5) moderat quellfähigen Smektit - auszuwählen aus Montmorillonit und allen Formen von Betonit - enthält.

7. Bauelement gemäß Anspruch 6, das durch calciumhaltigen Betonit gekennzeichnet ist.

8. Bauelement gemäß einem der vorhergehenden Ansprüche, das **dadurch gekennzeichnet** ist, dass die gelierbare, aktivierbare Mischung (5) feine Tone mit einer Plastizitätszahl über 35 enthält.

9. Bauelement gemäß einem der vorhergehenden Ansprüche, das **dadurch gekennzeichnet** ist, dass die gelierbare, aktivierbare Mischung (5) Quarzsand oder anderes durchlässiges Inertmaterial mit einer Korngröße zwischen 0,02 und 5 mm enthält.

10. Bauelement gemäß einem der vorhergehenden Ansprüche, das **dadurch gekennzeichnet** ist, dass es an einer der Verbindungsseiten (4) über Rillen verfügt, die bei der Aktivierung zur Erleichterung der Verbindung zwischen diesen Elementen (1) mit den Rillen des benachbarten Elements (1), die im rechten Winkel zu den Rillen des ersten Elements (1) verlaufen, ineinandergreifen.

11. Verfahren für den Zusammenbau zu einem Gebäudeteil von Bauelementen (1) aus verdichtetem, tonigem Lehm, das durch folgende Arbeitsschritte gekennzeichnet ist:
a) Bereitstellung einer Form;
b) Befüllen dieser Form mit tonigem Lehm;
c) Verdichtung dieses Lehms;
d) Herausnehmen des geformten Bauelements (1) aus der Form;
e) Aufbringung einer gelierbaren, aktivierbaren Beschichtung (5) auf mindestens einer der Seiten (4) des Bauelements (1);
f) Trocknung dieses Elements;
g) Lagerung;
h) Tünchen der zusammenzufügenden Seiten (4) eines ersten und zweiten Bauelements (1) zur Aktivierung der gelierbaren Mischung (5);
i) Zusammenfügen und aneinanderpressen dieser Oberflächen (4);
j) Aufweichung und Aufquellen der Kontaktzone (11) unter Einwirkung der aktivierten gelförmigen Mischung (9);
k) Verbindung der zwei angrenzenden Elemente (1);
l) Trocknung des Gebäudeteils.

12. Verfahren für den Zusammenbau zu einem Gebäudeteil gemäß Anspruch 11, das **dadurch gekennzeichnet** ist, dass Schritt e) gleichzeitig mit Schritt b) ausgeführt wird.

13. Verfahren für den Zusammenbau zu einem Gebäudeteil gemäß Anspruch 12, das **dadurch gekennzeichnet** ist, dass auf mindestens einer Innenseite der Form eine Schicht der aktivierbaren, gelierbaren Mischung (5) aufgebracht und der Rest mit tonigem Lehm ausgefüllt wird.

14. Verfahren für den Zusammenbau zu einem Gebäudeteil gemäß Anspruch 11, das **dadurch gekennzeichnet** ist, dass der Schritt e) durch Aufbringung von Putz, der die gelierbare, aktivierbare Mischung (5) enthält, nach Schritt b) ausgeführt wird.

15. Verfahren für den Zusammenbau zu einem Gebäudeteil gemäß einem der Ansprüche 11 bis 14, das **dadurch gekennzeichnet** ist, dass für die Trocknung des Elements (1) zwischen Ofentrocknung und Dampfbehandlung unter Druck im Autoklaven ausgewählt wird.

16. Verfahren für den Zusammenbau zu einem Gebäudeteil gemäß einem der Ansprüche 11 bis 15, das **dadurch gekennzeichnet** ist, dass als Tünche Kalkmilch (7) verwendet wird.

17. Verfahren für den Zusammenbau zu einem Gebäudeteil gemäß einem der Ansprüche 11 bis 16, das **dadurch gekennzeichnet** ist, dass die Tünche feine Tone mit einer Plastizitätszahl über 35 enthält.

## Claims

1. A construction element (1) made of compressed clay adobe, suitable for being joined on at least one of the surfaces (4) thereof with an adjacent element (1) **characterised in that** a layer including an activatable gellable mixture (5) extends over the at least one surface (4) of the element (1), wherein said layer permits said joining.

2. The construction element according to claim 1, **characterised in that** the clay adobe has a plasticity index between 10 et 35.

3. The construction element according to claim 1, **characterised in that** the clay adobe has a plasticity index greater than 35.

4. The construction element according to any of the above claims, **characterised in that** the clay adobe comprises 3 to 10 % lime by weight.

5. The construction element according to any of the above claims, **characterised in that** the clay adobe comprises insofar as possible a smectite to be chosen from montmorillonite and any type of bentonite.

6. The construction element according to any of the above claims, **characterised in that** the activatable gellable mixture (5) comprises smectite having a moderate swelling potential, to be chosen from montmorillonite and any type of bentonite.

7. The construction element according to claim 6, **characterised in that** the bentonite is of the type containing calcium.

8. The construction element according to any of the above claims, **characterised in that** the activatable gellable mixture (5) comprises fine clay particles having a plasticity index greater than 35.

9. The construction element according to any of the above claims, **characterised in that** the activatable gellable mixture (5) comprises siliceous sand or any other permeable inert material, having a grain size between 0,02 and 5 mm.

10. The construction element according to any of the above claims, **characterised in that** it comprises, on at least one of the aggregation surfaces (4) thereof, grooves suitable for engaging, following activation, with the grooves of the adjacent element (1) which are arranged perpendicularly to the grooves of the first element (1), so as to accentuate the aggregation of the elements (1) together.

11. Method for assembling a portion of a building using compressed clay adobe elements (1) comprising the following operations:
a) providing a mould;
b) filling the mould with clay adobe;
c) compressing the adobe;
d) releasing the construction element (1) formed from the mould;
e) producing a layer comprising an activatable gellable mixture (5) on at least one of the surfaces (4) of the construction element (1);
f) drying the element;
g) storing the element;
h) washing the surfaces (4) to be assembled of first and second construction elements (1), so as to activate the gellable mixture (5);
i) contacting and pressing the surfaces (4) against each other;
j) softening and swelling the contact area (11) under the effect of the activated gel-type mixture (9);
k) joining the two adjacent elements (1); and
l) drying the portion of the building.

12. The method for assembling a portion of a building according to claim 11, **characterised in that** operation e) is performed simultaneously with operation b).

13. The method for assembling a portion of a building according to claim 12, **characterised in that** a layer of the activatable gellable mixture (5) is placed on at least one of the surfaces of the mould, the remainder of the volume consisting of clay adobe.

14. The method for assembling a portion of a building according to claim 11, **characterised in that** operation e) is performed by applying a coating comprising the activatable gellable mixture (5) after operation b).

15. The method for assembling a portion of a building according to any of claims 11 to 14, **characterised in that** the operation for drying the element (1) is selected from oven-drying and an autoclave vapour pressure treatment.

16. The method for assembling a portion of a building according to any of claims 11 to 15, **characterised in that** the wash is a limewash (7).

17. The method for assembling a portion of a building according to any of claims 11 to 16, **characterised in that** the wash comprises fine clay particles having a plasticity index greater than 35.
